(19) Europäisches Patentamt
European Patent Office
Office européen des brevets

(11) EP 2 137 243 B1

(12) **EUROPEAN PATENT SPECIFICATION**

(45) Date of publication and mention of the grant of the patent:
**20.06.2012 Bulletin 2012/25**

(21) Application number: **08741382.9**

(22) Date of filing: **16.04.2008**

(51) Int Cl.:
***C08J 5/18*** *(2006.01)*

(86) International application number:
**PCT/KR2008/002137**

(87) International publication number:
**WO 2008/127068 (23.10.2008 Gazette 2008/43)**

(54) **OPTICAL FILM AND LIQUID CRYSTAL DISPLAY COMPRISING THE SAME**

OPTISCHER FILM UND FLÜSSIGKRISTALLANZEIGE DAMIT

FILM OPTIQUE ET AFFICHAGE À CRISTAUX LIQUIDES COMPRENANT CELUI-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.04.2007 KR 20070036853**

(43) Date of publication of application:
**30.12.2009 Bulletin 2009/53**

(73) Proprietor: **LG Chem, Ltd.**
**Youngdungpo-gu, Seoul 150-721 (KR)**

(72) Inventors:
- **KIM, Hee-Jung**
  **Daejeon Metropolitan City 305-340 (KR)**
- **KIM, Dong-Ryul**
  **Daejeon Metropolitan City 305-721 (KR)**
- **PARK, Young-Whan**
  **Daejeon Metropolitan City 305-340 (KR)**
- **NAM, Dae-Woo**
  **Daejeon Metropolitan City 302-782 (KR)**
- **JEONG, Boong-Goon**
  **Daejeon Metropolitan City 302-222 (KR)**
- **CHA, Ju-Eun**
  **Dalseong-gun**
  **Daegu Metropolitan City 711-767 (KR)**

(74) Representative: **Goddar, Heinz J. et al**
**Boehmert & Boehmert**
**Pettenkoferstrasse 20-22**
**80336 München (DE)**

(56) References cited:
**EP-A- 1 315 044**
**EP-A- 1 441 399**
**WO-A-2005/007733**
**WO-A-2005/071006**
**WO-A-2006/107970**
**JP-A- 2005 128 315**
**KR-A- 20060 082 814**
**US-A1- 2002 183 473**
**US-A1- 2006 024 521**
**US-A1- 2006 144 713**
**US-A1- 2007 042 137**
**US-B2- 6 565 764**

- **DATABASE WPI Week 200623 Thomson Scientific, London, GB; AN 2006-222013 XP002570846 & WO 2006/025445 A (NIPPON CATALYTIC CHEM IND CO) 9 March 2006 (2006-03-09)**
- **DATABASE WPI Week 200502 Thomson Scientific, London, GB; AN 2005-016898 XP002570847 & JP 2004 339332 A (DAINIPPON PRINTING CO LTD) 2 December 2004 (2004-12-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 137 243 B1

## Description

### Technical Field

The present invention relates to a protection film, a production method thereof a polarizing plate; and a liquid crystal display.
This application claims priority benefits from Korean Patent Application No. 10-2007-0036853, filed on April 16, 2007, the entire content of which is fully incorporated herein by reference.

### Background Art

In recent years, a polarizing plate having excellent optical properties, durability, adhesive reliability, and other additional functions is required to provide a high quality liquid crystal display.
In general, iodine-based polarizing plates are oriented by polyvinyl alcohol (PVA) in which polyiodide ions are stretched and oriented, so as to exhibit polarity. However, since a water-soluble PVA matrix is used in the production of iodine-based polarizing plates, the iodine-based polarizing plates are weak against heat and water even after cross-linking treatment, resulting in insufficient polarizing performance. In addition, the shrinkage may occur in the stretched direction of polarizer under a high temperature and high humidity environment, and the mechanical strength in the direction perpendicular to the stretched direction becomes very weak at room temperature. On the other hand, the iodine-based polarizing plates are disadvantageous in that polyiodide ions are weak against heat and water. Accordingly, for better dimensional stability, humidity resistance, and heat resistance of polarizing plate, protection layers are generally formed on both sides of polarizer.
Triacetyl cellulose (referred to as TAC, hereinafter) is mainly used as a protection layer in the commercialized polarizing plates. It is because that the TAC film has high light transmittance and low birefringence, and is easy to have hydrophilicity by surface modification.
However, as a protection layer for the polarizer, TAC has the following drawbacks. First, since the TAC film has high moisture permeability, it deteriorates the durability of polarizing plate under a high temperature and high humidity environment. Second, since the TAC film has high gas permeability, dichromatic materials such as iodine are easily deteriorated by oxygen. Third, since the TAC film contains a plasticizer, heat resistance is reduced, and the defective appearance such as scratch is caused during surface alkali treatment. Forth, in the case of using the TAC film and an adhesive containing acrylic acid, the TAC film is decomposed by acrylic acid.
Accordingly, there is a demand for the development of protection films having excellent transparency, mechanical properties and economic value, and low moisture absorption.
US 2007/0042137 A1 discloses a nanocomposite film comprising nanoparticles dispersed in in a polymer matrix comprising at least one polymer, wherein the nanoparticles have been generated in situ in the polymer matrix. The polymer may be an acrylic polymer, such as poly(methylmethacrylate).
WO 2006/107970 A2 discloses a polarizing film comprising a first phase of a first polymer and a second phase of a second polymer disposed within the first phase, and wherein an index of refraction difference between the first and second phases is greater than about 0.05 along a first axis and is less than about 0.05 along at least one axis orthogonal to the first axis. The second polymer can be selected from polymers, such as polymethylmethacrylate copolymers, and the first polymer can be selected from polymers such as polyethylene terephthalate, polybutylene terephthalate, and the like.
US 2006/0144713 A1 discloses an optical filter that may include a transparent substrate, a photocatalytic film formed on the back surface of the transparent substrate, a metal pattern formed by selectively exposing the photocatalytic film to light and growing a metal crystal thereon by plating, and a near-infrared ray shielding and photoselective absorbing layer formed on the metal pattern.
WO 2005/007733 A1 discloses a radiation curable resin composition comprising reactive oxide particles, a radically polymerizable compound including two or more functional groups, a salt of an inorganic acid and/or an organic acid, and optionally an organic polymer including a structural unit derived from an alkylene glycol. Such an organic polymer may include a structural unit derived from an alkylene glycol including a structure derived from (meth)acrylate.
WO 2005 / 071006 A1 discloses a composition having improved adherence with an addition-curable material, said composition comprising a resin component that is organic and polymeric and free of ethylenically unsaturated and silicon hydride functional groups; and an additive incorporated into said resin component.
From EP 1 441 399 A2 the use of a polymer dopant for electrically conducting, photoconducting and semiconducting components and devices is known, and novel polymers comprising electron accepting groups that are suitable as polymer dopants.
EP 1 315 044 A1 discloses a resist material comprising a first photo-acid generator exhibiting an absorption peak to exposure light having a wavelength of less than 300 nm; and a second photo-acid generator exhibiting an

absorption peak to exposure light having a wavelength of 300 nm or more.

WO 2006/025445 A discloses a sheet-like thermoplastic resin composition containg lactone ring-containing polymer as main component which can be used as protective film for polarizing plates oriented film, optical film, etc.

JP 2004 339332 A discloses an ink having thermosetting property comprising a pigment, a pigment dispersant with structural units, thermosetting resin, carboxyl group block compound with functional groups and an organic solvent.

JP 2005 128315 A discloses a vertical alignment membrane obtained by coating a substrate with a mixed composition including a polymer 100 weight section having a side-chain of 12 to 28 C-alkyl group and a reactive diluent 200 to 2000 weight section and the composition is hardened by radioactive rays.

US 6,565,764 B2 discloses molded products made by a process comprising preparing a structure comprising a block copolymer or a graft copolymer having two or more phases, wherein each phase is comprised of polymer chains, decomposing the polymer chains of at least one phase of the structure and cleaning the structure with a supercritical fluid or a subcritical fluid, thereby removing the decomposed polymer chains from the structure.

US 2002 183473 A1 discloses a polymerization process comprising polymerizing macromonomers with a compatible macro-initiator to form a graft (co)polymer.

US 2006 024521 A1 discloses articles that include an optical film and an optically clear pressure sensitive adhesive layer on at least one outer surface of the optical film. The pressure sensitive adhesive layer in the various articles contain a (meth)acrylate block copolymer.

## Disclosure of Invention

### Technical Problem

The present inventors have made an effort to solve the problems. They found that when a film is produced using a block copolymer comprising a block containing a predetermined amount of (meth)acrylate, the film is improved in transparency, physical properties, and moisture absorption, compared to a conventional acrylate-based film, thereby being useful as a protection film.

Accordingly, it is an object of the present invention to provide a protection film having excellent mechanical properties and low moisture absorption, a production method thereof, and a liquid crystal display comprising the same.

### Technical Solution

The object is achieved by the independent claims 1, 8, 11 and 12. Preferred embodiments are disclosed in the sub-claims.

### Advantageous Effects

According to the present invention, an optical film is produced by using a block copolymer comprising a block containing 50 mol% or more of (meth)acrylate, thereby having excellent transparency and physical properties, and low moisture absorption. The optical film is a protection film of polarizing plate or the like.

### Brief Description of the Drawings

FIG 1 is a schematic diagram showing the structure of liquid crystal display, which employs the film of the present invention as a protection film of polarizing plate.

### Best Mode for Carrying Out the Invention

Hereinafter, the present invention will be described in detail.

The protection film according to the present invention is characterized in that it comprises a block copolymer containing a block containing 50 mol% or more of (meth)acrylate. As used herein, the term '(meth)acrylate' encompasses all of methacrylate and acrylate.

In the present invention, a protection film is produced using the above block copolymer to provide a protection film having excellent transparency and physical properties, and low moisture absorption, compared to a conventional acrylate-based film.

In particular, the block copolymer is a block copolymer comprising a vinyl polymer block consisting of a hard segment containing 50 mol% or more of (meth)acrylate, and a block consisting of a soft segment containing at least one selected from the group consisting of polysiloxane, polyether, polyester and polyurethane.

In the present invention, a (meth)acrylic acid monomer constituting the vinyl polymer block preferably includes

an alkyl group having 1 to 12 carbon atoms, alkylene or aromatic substituent. Specific examples of the monomer include butyl(meth)acrylate, ethyl(meth)acrylate, methyl(meth)acrylate, n-propyl(meth)acrylate, isopropyl(meth)acrylate, t-butyl (meth)acrylate, pentyl(meth)acrylate, n-octyl(meth)acrylate, n-tetradecyl(meth)acrylate, 2-ethylhexyl(meth)acrylate, lauryl (meth)acrylate, and benzyl (meth)acrylate, and may be used singly or as a mixture of two or more.

The vinyl polymer block may further include other monomers such as a vinyl cyanide monomer, a maleimide monomer, and a vinyl monomer containing an aromatic ring, in addition to the (meth)acrylic acid monomer.

The vinyl cyanide monomer includes acrylonitrile or the like. Examples of the maleimide monomer include N-phenylmaleimide, N-cyclohexylmaleimide, N-methylmaleimide, and N-butylmaleimide. Examples of the vinyl monomer containing an aromatic ring include styrene-based monomers, specifically one or more selected from styrene, α-methylstyrene, 3-methylstyrene, p-methylstyrene, p-ethylstyrene, p-propylstyrene, 4-(p-methylphenyl)styrene, 1-vinylnaphthalene, p-chlorostyrene, m-chlorostyrene and p-nitrostyrene, but are not limited thereto.

In the present invention, it is most preferable that the vinyl polymer block consisting of a hard segment containing 50 mol% more of (meth)acrylate consists of methyl methacrylate.

In the present invention, polysiloxane which is contained in the block consisting of a soft segment may comprise a monomer represented by the following Formula 1:

[Formula 1]

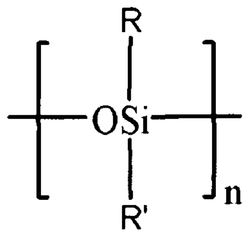

wherein R and R' are each independently selected from the group consisting of hydrogen, alkyl, alkenyl, alkynyl, cycloalkyl, aryl, heteroaryl, haloalkyl, haloalkenyl, haloalkynyl, halocycloalkyl, haloaryl and haloheteroaryl, and

n is an integer of 1 to 6.

In the present invention, it is most preferable that the polysiloxane is polydimethylsiloxane.

In the present invention, polyether which is contained in the block consisting of a soft segment may comprise a monomer represented by the following Formula 2:

[Formula 2]

$$-(C_nH_{2n}O)_x-$$

wherein n is an integer of 2 to 4, and

x is an integer of 5 or more.

In the present invention, polyester which is contained in the block consisting of a soft segment may comprise a monomer represented by the following Formula 3:

[Formula 3]

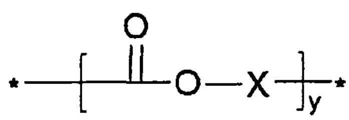

wherein X is $C_1$~$C_{24}$ alkyl, and

y is an integer of 1 or more.

In the present invention, polyurethane which is contained in the block consisting of a soft segment may comprise a monomer represented by the following Formula 4:

[Formula 4]

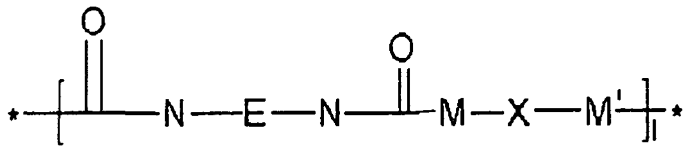

wherein E and X are each independently $C_1$~$C_{24}$ alkyl,

M and M' are each independently O or N, and

1 is an integer of 1 or more.

In the block containing at least one of polysiloxane, polyether, polyester and polyurethane, the monomers represented by Formulae 1 to 4 may be directly linked to each other, or may be linked by divalent group such as alkylene, alkenylene, alkynylene, cycloalkylene, arylene, heteroarylene, -O-, -S-, -NR"-, and -COO-, in which R" may be selected from the group consisting of hydrogen, alkyl, alkenyl, alkynyl, cycloalkyl, aryl, heteroaryl, haloalkyl, haloalkenyl, haloalkynyl, halocycloalkyl, haloaryl and haloheteroaryl.

The block copolymer used in the production of the protection film according to the present invention may be prepared in the form of (A-B)n, B-(A-B)n, and (A-B)n-A, or in the mixed forms thereof, in which A is a block containing 50 mol% or more of (meth)acrylate, and B is an additional block capable of constituting the block copolymer with A. For example, A may be a vinyl polymer block consisting of a hard segment containing 50 mol% or more of (meth)acrylate, and B may be a block consisting of a soft segment containing at least one selected from the group consisting of polysiloxane, polyether, polyester and polyurethane. n is an integer of 1 or more.

In the present invention, it is preferable that the weight ratio of the vinyl polymer block consisting of a hard segment containing 50 mol% or more of (meth)acrylate and the block consisting of a soft segment is 95:5 to 5:95. In the case where the weight ratio is not within the range, the produced block copolymer may not exhibit physical properties suitable for protection film.

A molecular weight of the block copolymer is not specifically limited, but is preferably a number-average molecular weight of 5,000 to 2,000,000, and more preferably a number-average molecular weight of 10,000 to 1,000,000.

Upon preparing the block copolymer, a molecular weight of the block B is preferably 1,000 to 200,000, and more preferably 1,500 to 20,000. In the case where the molecular weight of the block B is too low, the number of azo group added in the preparation of block copolymer is increased to reduce production efficiency, and the resulting block copolymer does not have desired physical properties. In contrast, in the case where the molecular weight of the block B is too high, much time is required for the preparation of block copolymer, and the size of domain B in the resulting block copolymer is increased to deteriorate transparency of block copolymer.

A molecular weight of the block A is not specifically limited, but is preferably a number-average molecular weight of 5,000 to 2,000,000, and more preferably a number-average molecular weight of 10,000 to 1,000,000 for the production of protection film.

The block copolymer may be prepared by a method known in the related art. For example, the block copolymer may be prepared by the following method, but is not limited thereto.

First, a block containing a soft segment with an azo group is prepared by the reaction between a block containing a soft segment, of which end is treated with alkylhydroxy or alkylamine, and a compound having an azo initiator group, and radical polymerization is performed using the block as a vinyl polymerization initiator to prepare the above mentioned block copolymer.

Second, radical polymerization of styrene is performed using an initiator, of which end is substituted with carboxylic acid, acyl chloride, or hydroxy amine. In this step, to control the molecular weight of polystyrene, the initiator is preferably added in an amount of 1 to 30 mol%, and more preferably 1 to 20 mol% to initiate the polymerization. The resulting polystyrene is subjected to reaction with the block containing a soft segment, of which end is treated with hydroxy, amine, isocyanate, or carboxylic acid, so as to prepare the block copolymer of the present invention.

More specifically, the block copolymer according to the present invention may be prepared using a macro nitrogen compound (described in Japanese Patent Publication No. 2000-53716) containing polysiloxane as a soft segment, represented by the following Formula 5, and the disclosure thereof is incorporated herein by reference in its entirety.

[Formula 5]

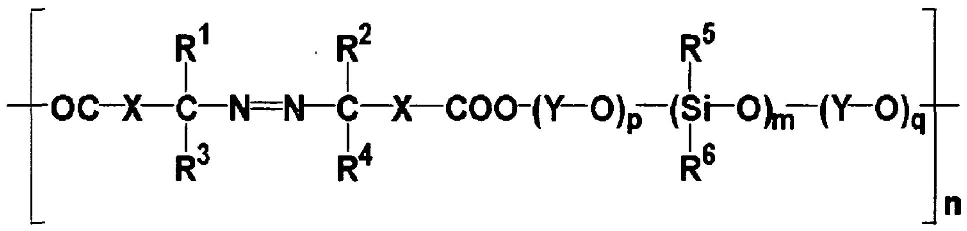

Wherein $R^1$ to $R^4$ are each independently an alkyl group or a cyano group,

$R^5$ and $R^6$ are each independently an alkyl group or aryl group,

X and Y are each independently an alkylene group, and

m, n, p and q are each independently a positive integer.

In Formula 5, the alkyl group may be a straight or branched chain, for example, an alkyl group having 1 to 6 carbon atoms. Specific examples thereof may include a methyl group, an ethyl group, an n-propyl group, an isopropyl group, an n-butyl group, an isobutyl group, a tert-butyl group, a sec-butyl group, an n-pentyl group, an isopentyl group, a tert-pentyl group, a neopentyl group, an n-hexyl group, an isohexyl group, a 1-methylpentyl group, and a 2-methylpentyl group.

In Formula 5, examples of the aryl group may include a phenyl group, an o-tolyl group, a m-tolyl group, a p-tolyl group, a 2,3-xylyl group, a 2,4-xylyl group, a 2,5-xylyl group, a 2,6-xylyl group, a 3,5-xylyl group, and a naphthyl group.

In Formula 5, the alkylene group represented by X or Y may be a straight, branched or cyclic chain, for example, an alkylene group having 1 to 10 carbon atoms. Specific examples thereof may include a methylene group, an ethylene group, a propylene group, a butylene group, a 2-methylpropylene group, a pentylene group, a 2,2-dimethyl propylene group, a 2-ethylpropylene group, a hexylene group, a heptylene group, an octylene group, a 2-ethylhexylene group, a nonylene group, a decylene group, a cyclopropylene group, a cyclopentylene group, and a cyclohexylene group, and among them, an alkylene group having 1 to 6 carbon atoms is preferable.

In Formula 5, m is generally an integer of 5 or more, preferably an integer of 5 to 2,000, and more preferably an integer of 5 to 300. n is generally an integer of 2 or more, preferably an integer of 2 to 100, and more preferably an integer of 2 to 50. p or q is generally an integer of 1 or more, preferably an integer of 1 to 200, and more preferably an integer of 1 to 100.

In Formula 5, the ratio of p and q is 10:1 to 1:10, and preferably 3:1 to 1:3. The number-average molecular weight of the compound of Formula 1 is generally 5,000 to 300,000, and preferably 8,000 to 150,000.

The above described (meth)acrylic acid monomer is polymerized using the compound represented by Formula 5 to prepare the block copolymer according to the present invention.

Examples of the polymerization using the compound represented by Formula 5 include solution polymerization, bulk polymerization, suspension polymerization, emulsion polymerization, and dispersion polymerization. Upon performing polymerization, if necessary, a chain transfer agent may be added to control the molecular weight, and examples thereof may include lauryl mercaptan, octyl mercaptan, butylmercaptan, 2-mercapto ethanol, thio glycol, and acidbutyl.

Examples of the solvent used in solution polymerization may include ethers such as tetrahydrofuran, diethylether, and dioxane, halogenated hydrocarbons such as chloroform, methylene chloride, and 1,2-dichloroethan, hydrocarbons such as n-hexane, petroleum ether, toluene, bezene, and xylene, alcohols such as methanol, ethanol, and isopropanol, ketones such as acetone, methyl ethyl ketone, and methylisobutylketone, acetonitrile, N,N-dimethyl formamide, and dimethyl sulfoxide. Such solvents may be used singly or in combination of two or more.

The polymerization is preferably performed under inert gas atmosphere. Examples of the inert gas may include nitrogen gas and argon gas.

Upon the polymerization, the amount of the macro nitrogen compound represented by Formula 5 may be used in general ranges, depending on the type of (meth)acrylic acid monomer to be polymerized, and typically in an amount of 0.01 to 100% by weight, and preferably 0.05 to 50% by weight, based on the (meth)acrylic acid monomer to be polymerized.

Upon the polymerization, the concentration of (meth)acrylic acid monomer to be polymerized may be generally 5 to 100% by weight (no solvent), and preferably 10 to 60% by weight, depending on the type of (meth)acrylic acid monomer to be polymerized.

The reaction temperature may vary depending on other polymerization conditions, and may be generally 30 to 130°C, preferably 40 to 120°C, and more preferably 60 to 90°C. Further, reaction time may vary depending on polymerization conditions such as reaction temperature, and type or concentration of monomer, and may be generally 2 to 24 hrs.

By using the compound represented by Formula 5 as a polymerization initiator, the block copolymer according to the present invention may be prepared easily and efficiently.

The block copolymer for the production of the protection film according to the present invention may further comprise a filler, a reinforcing agent, a stabilizer, a coloring agent, and antioxidant if necessary.

Further, the protection film according to the present invention may comprise an acrylic resin as a material to improve productivity, in addition to the above described block copolymer. At this time, a mixed ratio of block copolymer and acrylic resin is not specifically limited, but may be within the range, which does not affect the mechanical properties of the resulting protection film. The weight ratio of block copolymer and acrylic resin is preferably in a range of 95:5 to 5:95, and more preferably in a range of 80:20 to 20:80. In the case where the weight ratio of acrylic resin is more than 95%, the resulting optical film may not have suitable physical properties. The type of acrylic resin is not specifically limited, but may be commercially available one, for example, polymethylmethacrylate(PMMA).

The present invention further provides a method for producing a protection film, comprising the steps of a) preparing a block copolymer which comprises a block containing 50 mol% or more of (meth)acrylate, and b) molding a film using the block copolymer.

In particular, the block copolymer is a block copolymer comprising a vinyl polymer block consisting of a hard segment containing 50 mol% or more of (meth)acrylate, and a block consisting of a soft segment containing at least one selected from the group consisting of polysiloxane, polyether, polyester and polyurethane.

In the case of producing a protection film from the block copolymer, the block copolymer is prepared by a first molding process such as extrusion molding, inflation molding and solution casting. The protection film is preferably used as it is, that is, as an unstretched film for industrial use, and may be also provided with retardation by a stretching process as a second molding process to be used as a retardation film.

In the case of producing the film by extrusion molding as a first molding process, the copolymer is passed through a thin gap of T-die to produce a film having an optional thickness. At this time, to prevent defective appearance due to generated gas, it is preferable that the block copolymer is previously heated and dried at a temperature range of 80 to 130°C. To avoid the molecular chain orientation, extrusion molding is preferably performed at a sufficiently higher temperature than glass transition temperature, at which block copolymer is melted, and a shear rate of 1,000/sec or less. After passing through the die, the molten film may be cooled and solidified using a low-temperature metal roller or steel belt.

In the case of producing the film by solution casting as a first molding process, a solvent capable of solubilizing the block copolymer is selected, and a plurality of solvents may be used, if necessary. Specific examples of thereof may include methylene chloride, chloroform, chlorobenzene, 1,4-dioxane, 1,3-dioxolane, and tetrahydrofuran, but are not limited thereto. In particular, a good solvent to the block copolymer may be combined with a poor solvent for the purpose of controlling the rate of volatilization. Upon drying the film, it is important to form no bubble or internal void within the film by setting up the heating condition, and it is preferred that the concentration of the residual solvent be not more than 0.1 wt%.

It is preferable that the protection film produced by the first molding process has a thickness of 30 to 500 $\mu$m.

In the case of further stretching the produced protection film, it is preferable to carry out the stretching operation at a temperature in the range of from [Tg-20°C] to [Tg+30°C], when a glass transition temperature of the block copolymer referred to "Tg". The term "glass transition temperature" as referred to herein means a region from a temperature at which the storage modulus of the block copolymer begins to decrease, whereby the loss modulus becomes higher than the storage modulus to a temperature at which the orientation of the polymer chain disappears due to relaxation. The glass transition temperature may be measured by a differential scanning calorimeter (DSC).

In the production method of the protection film according to the present invention, the block copolymer may be blended with an acrylic resin, before molding the film. As mentioned above, a mixing ratio of the acrylic resin and block copolymer is not specifically limited, but may be within a range which does not impair physical properties of the protection film obtained by blending.

In addition, the present invention provides a liquid crystal display comprising a li quid crystal cell, and a first polarizing plate and second polarizing plate provided on both sides of the liquid crystal cell, in which one or more protection films consisting of a block copolymer that contains a block containing 50 ml% or more of (meth)acrylate are disposed between at least one of first polarizing plate and second polarizing plate and the liquid crystal cell.

In particular, the block copolymer is a block copolymer comprising a vinyl polymer block consisting of a hard segment containing 50 mol% or more of (meth)acrylate, and a block consisting of a soft segment containing at least one selected from the group consisting of polysiloxane, polyether, polyester and polyurethane.

Further, the present invention provides a polarizing plate comprising a polarizer, and a protection film that contains a block copolymer containing a block containing 50 mol% or more of (meth)acrylate provided on one side or both sides of the polarizer as a protection film.

In particular, the block copolymer is a block copolymer comprising a vinyl polymer block consisting of a hard segment containing 50 mol% or more of (meth)acrylate, and a block consisting of a soft segment containing at least one

selected from the group consisting of polysiloxane, polyether, polyester and polyurethane.

In the case where the protection film according to the present invention is provided as a protection film on only one side of the polarizer, a protection film known in the art may be provided on the other side.

As the polarizer, a film made of polyvinyl alcohol (PVA) containing iodine or a dichromatic dye may be used. The polarizer may be produced by dyeing iodine or a dichromatic dye on the polyvinyl alcohol film, but the production method is not specifically limited. In the present invention, the polarizer refers to one not including the protection film, and the polarizing plate refers to one including both of the polarizer and protection film.

In the polarizing plate according to the present invention, the protection film may be combined with the polarizer by a method known in the art.

for example, the protection film may be combined with the polarizer by an adhesion method using an adhesive. That is, an adhesive is first applied on the surface of the protection film or PVA film as a polarizer using a roll coater, gravure coater, bar coater, knife coater or capillary coater. Before the adhesive is completely dried, the protection film and polarizer are combined with each other by heat compression with a lamination roll or by compression at room temperature. In the case of using a hot melt type adhesive, a heat-pressing roll should be used.

A usable adhesive may be a one- or two-liquid type PVA adhesive, a polyurethane adhesive, an epoxy adhesive, a styrene butadiene rubber (SBR) adhesive, and a hot melt adhesive, but is not limited thereto. In the case of using the polyurethane adhesive, it may preferably be a polyurethane adhesive prepared using an aliphatic isocyanate compound which is not yellowed by light. In the case of using a one- or two-liquid type adhesive for dry laminate or an adhesive having a relatively low reactivity of isocyanate with a hydroxy group, a solution adhesive diluted with acetate, ketone, ether, or an aromatic solvent may be used. The viscosity of adhesive is preferably less than 5000 cps. These adhesives may have better storage stability and light transmittance of 90% or greater at 400 to 800 nm.

If a pressure-sensitive adhesive can show sufficient adhesive strength, it may also be used. Preferably, the pressure-sensitive adhesive is sufficiently cured by heat or ultraviolet radiation after lamination to increase the mechanical strength thereof to the level of the adhesive such that its adhesive strength is too high to peel it off without destroying one or both sides of film to which the pressure-sensitive adhesive is attached.

Specific examples of usable pressure-sensitive adhesive include natural rubber, synthetic rubber or elastomer, vinyl chloride/vinyl acetate copolymer, polyvinylalkylether, polyacrylate, and modified polyolefinic pressure-sensitive adhesive, which have good optical transparency, and hardened pressure-sensitive adhesives produced by adding a hardener such as isocianate thereto.

In addition, the present invention provides a liquid crystal display comprising a liquid crystal cell, and a first polarizing plate and second polarizing plate provided on both sides of the liquid crystal cell, in which at least one of first polarizing plate and second polarizing plate is a polarizing plate comprising a polarizer and an optical film that contains a block copolymer containing a block containing 50 mol% or more of (meth)acrylate provided on one side or both sides of the polarizer as a protection film.

In particular, the block copolymer is a block copolymer comprising a vinyl polymer block consisting of a hard segment containing 50 mol% or more of (meth)acrylate, and a block consisting of a soft segment containing at least one selected from the group consisting of polysiloxane, polyether, polyester and polyurethane.

The liquid crystal display will be described as follows, with reference to FIG 1. In FIG 1, the protection film according to the present invention may be disposed on one surface or both surfaces of at least one of a polarizing plate 11 and polarizing plate 12. The protection film according to the present invention may be disposed as an inner protection film or outer protection film. In FIG 1, a retardation film is illustrated, but is not essential. Further, FIG 1 illustrates that a backlight is disposed to the side of the polarizing plate 12, but it may be disposed to the side of the polarizing plate 11.

In the case of disposing the protection film according to the present invention to one side of polarizing plate 11 and/or polarizing plate 12, examples of the protection film disposed as a protection film to the other side may include a triacetate cellulose (TAC) film, an ROMP (ring opening metathesis polymerization) polynorbornene-based film, an HROMP (ring opening metathesis polymerization followed by hydrogenation) polymer film, which is obtained by hydrogenating a ring opening metathesis polymerized cycloolefine-based polymer, a polyester film, and an addition polymerization polynorbornene-based film. In addition, a film made from a transparent polymer may be available as the protection film, but is not limited thereto.

The liquid crystal display comprising the polarizing plate according to the present invention may further comprise the protection film according to the present invention between the polarizing plate and liquid crystal cell.

**Mode for the Invention**

Hereinafter, the present invention will be described in detail with reference to Examples. Examples are provided only for the purpose of illustrating the present invention, and accordingly it is not intended that the present invention is limited thereto.

**Example**

<**Preparation of macroinitiator**>

**1. Preparation of polydimethylsiloxane macroinitiator**

32 g of 1,13-bisphenol-polydimethylsiloxane (Mn= 3500) was dissolved in 50 g of chloroform, and 2.1 g of trimethylamine was added thereto, followed by stirring at room temperature for 5 min. Subsequently, while supplying 5°C cooling water, a solution of azobis-4-cyanopentanoyl chloride (3 g) dissolved in 50 g of chloroform was added dropwise for 30 min. After 24 hrs, byproducts and unreacted materials were washed with distilled water. Then, the resultant was dried under reduced pressure to give 30 g of macroazo initiator I (Mn = 32,000, PDI=2.0).

**2. Preparation of polycaprolactam macroinitiator**

45 g of polycaprolactamdiol (Mn= 4,000) was dissolved in 70 g of chloroform, and 3 g of trimethylamine was added thereto, followed by stirring at room temperature for 5 min. Subsequently, while supplying 5°C cooling water, a solution of azobis-4-cyanopentanoyl chloride (3.54 g, 11.2 mmol) dissolved in 50 g of chloroform was added dropwise for 30 min. After 24 hrs, byproducts and unreacted materials were washed with distilled water. Then, the resultant was dried under reduced pressure to give 40.5 g of macroazo initiator II (Mn = 25,000, PDI=2.0).

**3. Preparation of polyethyleneoxide macroinitiator**

45 g of polyethyleneoxidediol (Mn=3,200) was dissolved in 70 g of chloroform, and 3.2 g of trimethylamine was added thereto, followed by stirring at room temperature for 5 min. Subsequently, while supplying 5°C cooling water, a solution of azobis-4-cyanopentanoyl chloride (4.4 g, 14 mmol) dissolved in 40 g of chloroform was added dropwise for 30 min. After 24 hrs, byproducts and unreacted materials were washed with distilled water. Then, the resultant was dried under reduced pressure to give 41 g of macroazo initiator III (Mn = 23,000, PDI=1.8).

**4. Preparation of polytetrahydrofuran macroinitiator**

60 g of polytetrahydrofurandiol (Mn= 5000) was dissolved in 170 g of chloroform, and 2.4 g of trimethylamine was added thereto, followed by stirring at room temperature for 5 min. Subsequently, while supplying 5°C cooling water, a solution of azobis-4-cyanopentanoyl chloride (3.8 g, 12 mmol) dissolved in 50 g of chloroform was added dropwise for 30 min. After 24 hrs, byproducts and unreacted materials were washed with distilled water. Then, the resultant was dried under reduced pressure to give 39.5 g of macroazo initiator IV (Mn = 16,000, PDI=2.2).

<**Preparation of block copolymer**>

[Example 1]

Preparation of polydimethylsiloxane(PDMS)-b-polymethylmethacrylate(PMMA) block copolymer

10 g of the produced polydimethylsiloxane macroazo initiator I was added to 70 g of methyl methacrylate in a 100 ml flask reactor at 90°C, equipped with a stirrer, followed by polymerization initiation. After 18 hrs, the reaction was stopped by dilution with 100 mL of THF, and stirring was continuously performed at room temperature to completely dissolve the resultant. An excessive amount of methanol was slowly added dropwise, and dried to give 59 g of white solid. Its glass transition temperature measured using DSC was 130°C, and a weight average molecular weight calibrated with polystyrene standards and measured using GPC was 200,000.

[Examples 2 to 3]

Polymerization was performed in the same manner as in Example 1, except using a different amount of polydimethylsiloxane macroazo initiator I. The results are shown in the following Table 1.

Table 1

[Table 1]

| | Macroazoinitiator I (g) | Methyl methacrylate (g) | Weight average molecular weight | Glass transition temperature (°C ) |
|---|---|---|---|---|
| Example 2 | 5 | 70 | 230,000 | 129 |
| Example 3 | 14 | 70 | 140.000 | 128 |

[Example 4]

Preparation of polycaprolactam(PCL)-b-polymethylmethacrylate(PMMA) block copolymer

10 g of the produced polycaprolactam macroazo initiator II was added to 70 g of methyl methacrylate in a 100 ml flask reactor at 90°C, equipped with a stirrer, followed by polymerization initiation. After 18 hrs, the reaction was stopped by dilution with 100 mL of THF, and stirring was continuously performed at room temperature to completely dissolve the resultant. An excessive amount of methanol was slowly added dropwise, and dried to give 50 g of white solid. Its glass transition temperature measured using DSC was 94°C, and a weight average molecular weight calibrated with polystyrene standards and measured using GPC was 140,000.

[Example 5]

Preparation of polyethyleneoxide-b-polymethylmethacrylate (PMMA) block copolymer

7 g of the produced polyethyleneoxide macroazo initiator III was added to 70 g of methyl methacrylate in a 100 ml flask reactor at 90°C, equipped with a stirrer, followed by polymerization initiation. After 18 hrs, the reaction was stopped by dilution with 100 mL of THF, and stirring was continuously performed at room temperature to completely dissolve the resultant. An excessive amount of methanol was slowly added dropwise, and dried to give 50 g of white solid. Its glass transition temperature measured using DSC was 105°C, and a weight average molecular weight calibrated with polystyrene standards and measured using GPC was 180,000.

[Example 6]

Preparation of polytetrahydrofuran-b-polymethylmethacrylate (PMMA) block copolymer

10 g of the produced polytetrahydrofuran macroazo initiator IV was added to 70 g of methyl methacrylate in a 100 ml flask reactor at 90°C, equipped with a stirrer, followed by polymerization initiation. After 18 hrs, the reaction was stopped by dilution with 100 mL of THF, and stirring was continuously performed at room temperature to completely dissolve the resultant. An excessive amount of methanol was slowly added dropwise, and dried to give 50 g of white solid. Its glass transition temperature measured using DSC was 103°C, and a weight average molecular weight calibrated with polystyrene standards and measured using GPC was 120,000.

<Production of film>

7.5 g of block copolymers prepared in Examples 1 to 6 were added to 42.5 g of dichloroethane, and stirred at 30°C for 24 hrs to prepare a homogeneous solution. Filtration was performed using a 5 μm filter to remove any undissolved material and dust, and a 15 wt% casting solution was prepared. The casting solution was applied to a glass substrate for LCD, cast with a doctor blade at a speed of 0.3 m/min, and dried at room temperature for 60 min. Then, drying was performed at 60°C for 60 min, and at 115°C for 90 min to remove the solvent, and then the polymer film was released. The physical properties of the produced film are shown in the following Table 1. Total transmittance and haze of the film were measured using a reflectance-transmittance meter (HR-100, Murakami color research Lab.). The total transmittance of each film was 90% or more, and the haze of each film is shown in the following Table 2. It was found that except for the block copolymer film in Example 2, each block copolymer film has improved toughness, compared to a conventional polymethyl methacrylate resin. The moisture permeability was measured using a water vapor permeability tester (Lssy, L80-5000) under the conditions of a temperature of 38°C and the humidity of 100% at the bottom of sample and humidity of 10% at the top of the sample. A TAC film has a moisture permeability of 260.

Table 2

[Table 2]

| | Film thickness (μm) | Haze (%) | Moisture permeability ($g/m^2 \cdot day$) | Moisture absorption (%) | Toughness |
|---|---|---|---|---|---|
| Examples 1 | 78 | 0.2 | 34 | 1.3 | Tough |
| Example 2 | 86 | 0.3 | 35 | 1.2 | Less tough |
| Example 3 | 87 | 0.5 | 38 | 1.3 | Tough |
| Example 4 | 80 | 0.4 | 30 | 1.8 | Tough |
| Example 5 | 85 | 0.3 | 33 | 1.6 | Tough |
| Example 6 | 79 | 0.5 | 35 | 1.9 | Tough |

Further, the films of block copolymer produced in Examples 2, 3 and 5 were stretched, and the results are summarized in the following Table 3. From the results, it can be seen that the film has a lower retardation in the surface direction and a lower retardation in the thickness direction, thereby being suitably used as an optical film.

The retardation value in the thickness direction and the retardation value in the surface direction of the each retardation film were measured using the following method.

The retardation value in the thickness direction was measured using Kobra21-ADH (commercial name) that is manufactured by Oji Scientific Instrument Co. Refractive indexes $n_x$, $n_y$, and $n_z$ were measured in respect to axes at 590 nm while the axis having the highest refractive index in the surface direction was set to an x-axis at 590 nm, the axis which was perpendicular to the x-axis in the surface direction was set to an y-axis, and the axis which was perpendicular to the x-y plane was set to a z-axis. The thickness of the film was measured to obtain the refractive indexes $n_x$, $n_y$, and $n_z$, in respect to the axes. The retardation in the thickness direction and the retardation in the surface direction of the optical film were calculated using the following Equations 1 and 2.

[Equation 1]

$$R_{th} = (n_z - n_y) \times d$$

wherein $n_y$ is the refractive index in the transverse direction in respects to $n_x$ in the plane,
**[0134]** $n_z$ is the refractive index in the direction which is perpendicular in respects to the plane of the film,
**[0135]** d is the thickness of the film, and
$R_{th}$ is the thickness retardation value.

[Equation 2]

$$R_{in} = (n_x - n_y) \times d$$

wherein $n_x$ is the refractive index in the direction in which the refractive index is highest in respects to the plane of the film,
**[0138]** $n_y$ is the refractive index in the transverse direction in respects to $n_x$ in the plane,
**[0139]** d is the thickness of the film, and
$R_{in}$ is the in-plane retardation value.
Further, elongation is defined by the following Equation 3.
[Equation 3]
Elongation (%) = [(final length of sample after elongation - initial length of sample before elongation) / initial length of sample before elongation] ×100
Table 3.

[Table 3]

| | Elongation temperature (°C) | Elongation (%) | Elongation rate (mm/min) | Film thickness (μm) | Retardation value in surface direction (nm) | Retardation value in thickness direction (nm) |
|---|---|---|---|---|---|---|
| Example 2 | 140 | 100 | 50 | 62 | 29 | 7 |
| | 140 | 50 | 50 | 72 | 26 | 10 |
| | 140 | 25 | 50 | 77 | 16 | 11 |
| Example 3 | 140 | 100 | 50 | 65 | 29 | 4 |
| | 140 | 50 | 50 | 78 | 26 | 24 |
| | 140 | 25 | 50 | 81 | 18 | 2 |
| Example 5 | 140 | 100 | 50 | 62 | 29 | 4 |
| | 140 | 50 | 50 | 73 | 25 | 3 |
| | 140 | 25 | 50 | 77 | 19 | 3 |

## Claims

1. A protection film for a polarizer consisting of a block copolymer and optionally an acrylic resin, wherein the block copolymer comprises a block containing 50 mol% or more of (meth)acrylate, wherein the block copolymer comprises a vinyl polymer block consisting of a hard segment containing 50 mol% or more of (meth)acrylate, and a block consisting of a soft segment containing at least one selected from the group consisting of polysiloxane, polyether, polyester and polyurethane.

2. The protection film for a polarizer according to claim 1, wherein the (meth)acrylic add monomer constituting the vinyl polymer block has an alkyl group having 1 to 12 carbon atoms, alkylene or aromatic substituent.

**3.** The protection film for a polarizer according to claim 1, wherein the vinyl polymer block further comprises a monomer selected from the group consisting of a vinyl cyanide monomer, a maleimide monomer, and a vinyl monomer containing an aromatic ring.

**4.** The protection film for a polarizer according to claim 1, wherein the polysiloxane comprises a unit represented by the following Formula 1, the polyether comprises a unit represented by the following Formula 2, the polyester comprises a unit represented by the following Formula 3 and the polyurethane comprises a unit represented by the following Formula 4:

[Formula 1]

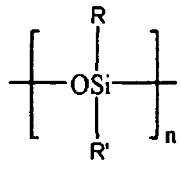

wherein R and R' are each independently selected from the group consisting of hydrogen, alkyl, alkenyl, alkynyl, cjcloalkyl, aryl, heteroaryl, haloalkyl, haloalkenyl, haloalkynyl, halocjcloalkyl, haloaryl and haloheteroaryl, and
n is an integer of 1 to 6,

[Formula 2]

$$-(C_nH_{2n}O)_x-$$

wherein n is an integer of 2 to 4, and x is an integer of 5 or more,

[Formula 3]

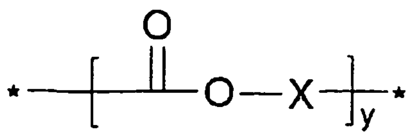

wherein X is $C_1 \sim C_{24}$ alkyl, and y is an integer of 1 or more, and

[Formula 4]

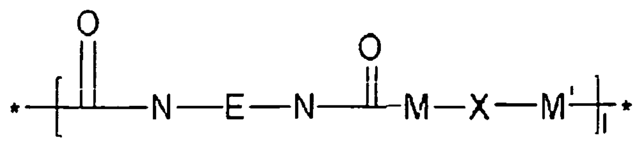

wherein E and X are each independently $C_1 \sim C_{24}$ alkyl,
M and M' are each independently O or N, and
1 is an integer of 1 or more.

**5.** The protection film for a polarizer according to claim 1, wherein the block copolymer is in the form of (A-B)n, B-(A-B )n, (A-B)n-A, or in the mixed forms thereof, and A is a vinyl polymer block consisting of a hard segment containing 50 mol% or more of (meth)acrylate, B is a block consisting of a soft segment containing at least one selected from the group consisting of polysiloxane, polyether, polyester and polyurethane, and n is an integer of 1 or more.

**6.** The protection film for a polarizer according to claim 1, wherein the weight ratio of the vinyl polymer block consisting of a hard segment and the block consisting of a soft segment is 95:5 to 5:95.

7. The protection film for a polarizer according to claim 1, wherein the weight ratio of the block copolymer and the acrylic resin is 95:5 to 5:95.

8. A method for producing the protection film for a polarizer according to any one of claims 1 to 6, comprising the steps of a) preparing a block copolymer which comprises a block containing 50 mol% or more of (meth)acrylate, and b) molding a film using the block copolymer.

9. The method for producing the protection film for a polarizer according to claim 8, wherein in step b), the block copolymer is blended with an acrylic resin, before molding the film.

10. The method for producing the protection film for a polarizer according to claim 9, wherein the weight ratio of the block copolymer and the acrylic resin is 95:5 to 5:95.

11. A polarizing plate comprising polarizer, and the protection film for a polarizer according to any one of claims 1 to 7 which comprises a block copolymer comprising a block containing 50 mol% or more of (meth)acrylate provided on one side or both sides of the polarizer as a protection film.

12. A liquid crystal display comprising a liquid crystal cell, and a first polarizing plate and second polarizing plate provided on both sides of the liquid crystal cell, wherein at least one of first polarizing plate and second polarizing plate is a polarizing plate comprising a polarizer and the protection film for a polarizer of any one of claims 1 to 7, which comprises a block copolymer comprising a block containing 50 mol% or more of (meth)acrylate provided on one side or both sides of the polarizer as a protection film.

## Patentansprüche

1. Schutzfilm für einen Polarisator, bestehend aus einem Blockcopolymer und optional einem Acrylharz, wobei das Blockcopolymer einen Block enthaltend 50 mol% oder mehr an (Meth)acrylat umfasst, wobei das Blockcopolymer einen Vinylpolymerblock bestehend aus einem Hartsegment enthaltend 50 mol% oder mehr (Meth)acrylat und einen Block bestehend aus einem Weichsegment enthaltend wenigstens eines ausgewählt aus der Gruppe bestehend aus Polysiloxan, Polyether, Polyester und Polyurethan umfasst.

2. Schutzfilm für einen Polarisator nach Anspruch 1, wobei das den Vinylpolymerblock ausmachende zugefügte (meth) acrylische Monomer einen Alkylgruppen-Substituenten mit 1 bis 12 Kohlenstoffatomen, einen Alkylen- oder aromatischen Substituenten aufweist.

3. Schutzfilm für einen Polarisator nach Anspruch 1, wobei der Vinylpolymerblock ferner ein Monomer umfasst, das ausgewählt ist aus der Gruppe bestehend aus Vinylcyanidmonomer, Maleimidmonomer und einem Vinylmonomer enthaltend einen aromatischen Ring.

4. Schutzfilm für einen Polarisator nach Anspruch 1, wobei das Polysiloxan eine Einheit umfasst, die dargestellt ist durch die folgende Formel 1, der Polyether eine Einheit umfasst, die dargestellt ist durch die folgende Formel 2, der Polyester eine Einheit
umfasst, die dargestellt ist durch die folgende Formel 3, und das Polyurethan eine Einheit umfasst, die dargestellt ist durch die folgende Formel 4:

[Formel 1]

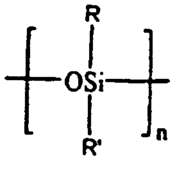

wobei R und R' jeweils unabhängig ausgewählt sind aus der Gruppe bestehend aus Wasserstoff, Alkyl, Alkenyl, Alkinyl, Cycloalkyl, Aryl, Heteroaryl, Halogenalkyl, Halogenalkenyl, Halogenalkinyl, Halogencycloalkyl, Halogenaryl und Halogenheteroaryl, und

n eine ganze Zahl von 1 bis 6 ist;

[Formel 2]

$$-(C_nH_{2n}O)_x-$$

wobei n eine ganze Zahl von 2 bis 4 ist, und
x eine ganze Zahl von 5 oder höher ist.

[Formel 3]

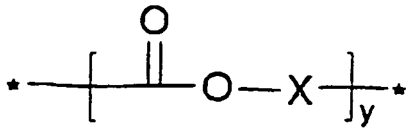

wobei X $C_1$-$C_{24}$-Alkyl ist, und
y eine Zahl von 1 oder höher ist, und

[Formel 4]

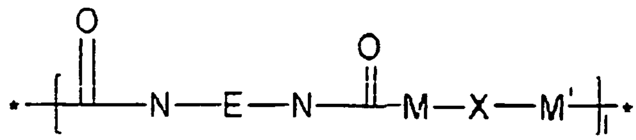

wobei E und X jeweils unabhängig $C_1$-$C_{24}$-Alkyl sind,
M und M' jeweils unabhängig O oder N sind, und
1 eine ganze Zahl von 1 oder höher ist.

**5.** Schutzfilm für einen Polarisator nach Anspruch 1, wobei das Blockcopolymer in der Form (A-B)n, B-(A-B)n, (A-B) n-A oder in den gemischten Formen derselben ist, und wobei A ein Vinylpolymerblock ist bestehend aus einem Hartsegment enthaltend 50 mol% oder mehr an (Meth)acrylat, B ein Block bestehend aus einem Weichsegment enthaltend wenigstens eines ausgewählt aus der Gruppe bestehend aus Polysiloxan, Polyether, Polyester und Polyurethan ist, und wobei n eine ganze Zahl von 1 oder höher ist.

**6.** Schutzfilm für einen Polarisator nach Anspruch 1, wobei das Gewichtsverhältnis des Vinylpolymerblocks bestehend aus einem Hartsegment und des Blocks bestehend aus einem Weichsegment 95:5 bis 5:95 ist.

**7.** Schutzfilm für einen Polarisator nach Anspruch 1, wobei das Gewichtsverhältnis des Blockcopolymers und des Acrylharzes 95:5 bis 5:95 ist.

**8.** Verfahren zum Herstellen des Schutzfilms für einen Polarisator nach einem der Ansprüche 1 bis 6, umfassend die Schritte a) Herstellen eines Blockcopolymers, das einen Block enthaltend 50 mol% oder mehr an (Meth)acrylat umfasst und b) Formen eines Films unter Verwendung des Blockcopolymers.

**9.** Verfahren zum Herstellen des Schutzfilms für einen Polarisator nach Anspruch 8, wobei in Schritt b) das Blockcopolymer mit einem Acrylharz vor dem Formen des Films vermischt wird.

**10.** Verfahren zum Herstellen des Schutzfilms für einen Polarisator nach Anspruch 9, wobei das Gewichtsverhältnis des Blockcopolymers und des Acrylharzes 95:5 bis 5:95 ist.

**11.** Polarisationsplatte umfassend einen Polarisator und den Schutzfilm für einen Polarisator nach einem der Ansprüche 1 bis 7, der ein Blockcopolymer umfassend einen Block enthaltend 50 mol% oder mehr an (Meth)acrylat umfasst, bereitgestellt auf einer Seite oder beiden Seiten des Polarisators als ein Schutzfilm.

**12.** Flüssigkristallanzeige umfassend eine Flüssigkristallzelle und eine erste Polarisationsplatte und eine zweite Polarisationsplatte, die auf beiden Seiten der Flüssigkristallzelle bereitgestellt sind, wobei wenigstens eine der ersten Polarisationsplatte und der zweiten Polarisationsplatte eine Polarisationsplatte ist, die einen Polarisator und den Schutzfilm für einen Polarisator nach einem der Ansprüche 1 bis 7 umfasst, welcher ein Blockcopolymer umfasst, das einen Block enthaltend 50 mol% oder mehr an (Meth)acrylat umfasst, bereitgestellt auf einer Seite oder auf beiden Seiten des Polarisators als ein Schutzfilm.

## Revendications

**1.** Film de protection destiné à un polariseur constitué d'un copolymère bloc et facultativement d'une résine acrylique, dans lequel le copolymère bloc comprend un bloc contenant 50 % en moles ou plus de (méth)acrylate, dans lequel le copolymère bloc comprend un bloc polymère vinylique constitué d'un segment dur contenant 50 % en moles ou davantage de (méth)acrylate et un bloc constitué d'un segment mou contenant au moins un composé sélectionné parmi le groupe constitué de polysiloxane, de polyéther, de polyester et de polyuréthane.

**2.** Film de protection destiné à un polarisateur selon la revendication 1, dans lequel le monomère (méth)acrylique d'addition constituant le bloc polymère vinylique possède 1 à 12 atomes de carbone, de l'alkylène ou un substituant aromatique.

**3.** Film de protection destiné à un polariseur selon la revendication 1, dans lequel le bloc polymère vinylique comprend un monomère sélectionné parmi le groupe constitué d'un monomère de cyanure de vinyle, d'un monomère de maléimide et d'un monomère de vinyle contenant un anneau aromatique.

**4.** Film de protection destiné à un polarisateur selon la revendication 1, dans lequel le polysiloxane comprend une unité représentée par la Formule 1, le polyester comprend une unité représentée par la Formule 2 suivante, le polyester comprend une unité représentée par la Formule 3 suivante et le polyuréthane comprend une unité représentée par la Formule 4 suivante.

[Formule 1]

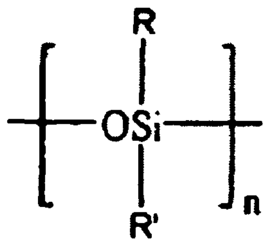

où R et $R^1$ sont chacun indépendamment sélectionnés parmi le groupe constitué d'hydrogène, alkyle, alkényle, alkynyle, cicloalkyle, aryle, hétéroaryle, haloalkyle, haloalkényle, haloalkényle, haloalkynyle, halocycloalkyle,haloaryle et halohétéroaryle, et
N désigne un nombre entier compris entre 1 et 6,

[Formule 2]

$$-(C_nH_{2n}O)_x-$$

où n désigne un nombre entier compris entre 2 et 4, et

X désigne un nombre entier de 5 ou davantage,

[Formule 3]

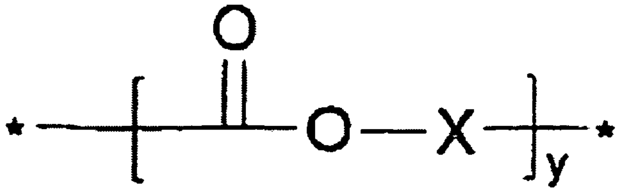

où X désigne un alkyle en $C_1$ à $C_{24}$, et
Y désigne un nombre entier de 1 ou davantage, et

[Formule 4]

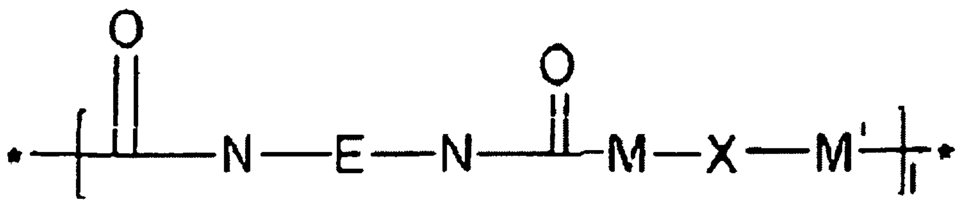

où E et X désignent indépendamment un alkyle en $C_1$ à $C_{24}$,
M et $M^1$ désignent chacun indépendamment O ou N, et
1 représente un nombre entier de 1 ou davantage.

**5.** Film de protection destiné à un polariseur selon la revendication 1, dans lequel le copolymère bloc est sous la forme de (A-B)n, B-(A-B)n, (A-B)n-A ou sous leurs formes mélangées et A représente un bloc polymère vinylique constitué d'un segment dur contenant 50 % en moles de (méth)acrylate, B désigne un bloc constitué d'un segment mou contenant au moins un composé sélectionné parmi le groupe constitué de polysiloxane, polyester et polyuréthane et n représente un nombre enter de 1 ou davantage.

**6.** Film de protection destiné à un polariseur selon la revendication 1, dans lequel le rapport pondéral du bloc polymère vinylique d'un segment dur et du bloc constitué d'un segment mou est de 95:5 à 5:95.

**7.** Film de protection destiné à un polariseur selon la revendication 1, dans lequel le rapport pondéral du copolymère bloc et de la résine acrylique est de 95:5 à 5:95.

**8.** Procédé de production d'un film de protection destiné à un polariseur selon l'une quelconque des revendications 1 à 6, comprenant les étapes de a) préparation d'un copolymère bloc qui comprend un bloc contenant 50 % en moles ou davantage de (méth)acrylate et b) le moulage d'un film en utilisant un copolymère bloc.

**9.** Procédé de production du film de protection destiné à un polariseur selon la revendication 8, dans lequel à l'étape b) le copolymère bloc est mélangé à une résine acrylique avant le moulage du film.

**10.** Procédé de production du film de protection destiné à un polariseur selon la revendication 9, dans lequel le rapport pondéral du copolymère bloc et de la résine acrylique est de 95:6 à 5:95.

**11.** Plaque de polarisation comprenant un polariseur et le film de protection destiné à un polariseur selon l'une quelconque des revendications 1 à 7 qui comprend un copolymère bloc comprenant un bloc contenant 50 % en moles ou davantage de (méth)acrylate sur un côté ou les deux côtés du polarisateur en tant que film de protection.

**12.** Affichage à cristaux liquides comprenant une cellule à cristaux liquides et une première plaque de polarisation et une deuxième plaque de polarisation prévues sur les deux côtés de la cellule à cristaux liquides, dans lequel au moins une de la première plaque de polarisation et de la deuxième plaque de polarisation est une plaque de polarisation contenant un polariseur et le film de protection destiné à un polariseur de l'une quelconque des revendications 1 à 7, qui comprend un bloc copolymère contient un bloc contenant 50 % en moles ou davantage de (méth)acrylate prévu d'un côté ou des deux côtés du polariseur en tant que film de protection.

[Fig. 1]

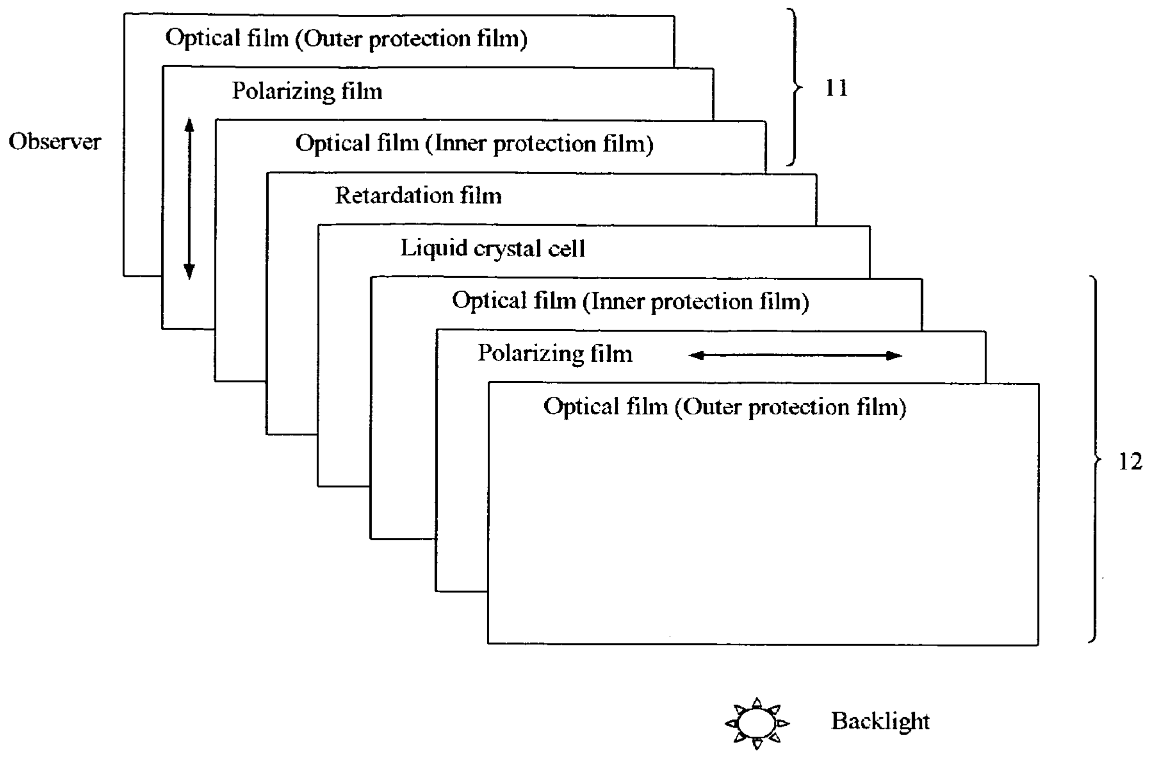
Optical film (Outer protection film)
Polarizing film
Optical film (Inner protection film)
11
Observer
Retardation film
Liquid crystal cell
Optical film (Inner protection film)
Polarizing film
Optical film (Outer protection film)
12
Backlight

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020070036853
- US 20070042137 A1
- WO 2006107970 A2
- US 20060144713 A1
- WO 2005007733 A1
- EP 1441399 A2
- EP 1315044 A1
- WO 2006025445 A
- JP 2004339332 A
- JP 2005128315 A
- US 6565764 B2
- US 2002183473 A1
- US 2006024521 A1
- JP 2000053716 A